# FASCICULE DE BREVET EUROPEEN

(11) **EP 2 443 335 B1**
(45) Date de publication et mention de la délivrance du brevet: **09.07.2014**
(21) Numéro de dépôt: 10724740.5
(22) Date de dépôt: 03.06.2010
(51) Int. Cl.: F02M 25/07, F02B 29/04

(54) **DISPOSITIF DE MELANGE D'UN FLUX DE GAZ D'ADMISSION ET D'UN FLUX DE GAZ D'ECHAPPEMENT RECIRCULES**
VORRICHTUNG ZUR MISCHUNG EINES ANSAUGGASFLUSSES UND REZIRKULIERTEN ABGASFLUSSES MIT MEHREREN DIFFUSIONSÖFFNUNGEN
DEVICE FOR MIXING A FLOW OF INTAKE GAS AND A FLOW OF RECIRCULATED EXHAUST GAS COMPRISING A PLURALITY OF DIFFUSION OPENINGS

(30) Priorité: 15.06.2009 FR 0902891
(43) Date de publication de la demande: 25.04.2012
(73) Titulaire: Valeo Systèmes de Contrôle Moteur, 95800 Cergy Saint-Christophe (FR)
(72) Inventeur: RIDOLFI, Gabriel, F-95000 Cergy (FR); LEROUX, Samuel, F-78300 Poissy (FR); RECHKE, Bastien, F-78110 Le Vesinet (FR)
(74) Mandataire: Metz, Gaëlle
(86) Numéro de dépôt international: PCT/EP2010/057757
(87) Numéro de publication internationale: WO 2010/145946

(56) Documents cités:
- EP-A1- 1 882 836
- EP-A2- 1 911 946
- WO-A1-2008/116568
- DE-A1-102004 013 309
- US-A- 4 135 481
- US-B1- 6 237 336

## Description

L'invention concerne le domaine des dispositifs de mélange de deux flux de gaz, en particulier le mélange d'un flux de gaz d'échappement et d'un flux de gaz d'admission refroidi préalablement par un échangeur de chaleur d'un véhicule automobile.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non. Les gaz admis dans la chambre de combustion sont dénommés gaz d'admission.

Ces gaz d'admission doivent généralement être refroidis avant d'être introduits dans la chambre de combustion; cette fonction est remplie par un échangeur de chaleur, qui est un refroidisseur.

De manière classique, un échangeur de chaleur comporte un faisceau d'échange de chaleur formé par une pluralité d'éléments d'échange empilés entre deux plaques d'extrémités (plaque de fond et plaque de dessus). Les espaces entre les éléments d'échange du faisceau forment des canaux de conduite d'un flux de gaz à refroidir, ici des gaz d'admission. Les éléments d'échange du faisceau sont creux et conduisent un fluide caloporteur, destiné à échanger de la chaleur avec le flux de gaz à refroidir circulant dans les canaux de conduite de fluide et ainsi le refroidir.

Afin de réduire les émissions polluantes, il est connu d'introduire dans le flux de gaz d'admission des gaz d'échappement dit "recirculés". Il s'agit de gaz d'échappement prélevés en aval de la chambre de combustion pour être réacheminés (recirculés) vers le flux de gaz d'admission, en amont de la chambre de combustion, où ils sont mélangés aux gaz d'admission en vue de leur admission dans la chambre de combustion. Traditionnellement, les gaz d'échappement recirculés sont introduits via un ou plusieurs points d'introduction ménagés dans une canalisation d'admission des gaz s'étendant entre le refroidisseur des gaz d'admission et le moteur, afin que les gaz d'échappement recirculés se mélangent avec les gaz provenant du refroidisseur. Malheureusement, le mélange entre les gaz d'échappement recirculés et les gaz d'admission n'est généralement pas réalisé de manière homogène lorsque les gaz sont admis dans le moteur, ce qui dégrade les performances de la combustion.

Une tendance actuelle vise à rapprocher au maximum l'échangeur de chaleur du moteur pour gagner en compacité, entraînant une diminution de la longueur du canal d'admission des gaz et par conséquent une diminution du nombre de points d'introduction potentiels et de la longueur de canalisation de mélange des gaz, ce qui accentue le problème relevé ci-dessus.

Il est connu par la demande de brevet publiée sous le numéro WO2008/116568 un module d'échange de chaleur destiné à être monté sur les cylindres d'un moteur à combustion interne. En référence aux figures 1 et 2 représentant le module de la demande WO2008/116568, le module d'échange de chaleur comprend, dans sa partie amont 10, un faisceau d'échange de chaleur 11, et dans sa partie aval 30, des canalisations de sortie 6 agencées pour se connecter respectivement aux cylindres du moteur.

Au cours de son fonctionnement, un flux de gaz d'admission G est introduit par une face amont du module d'échange pour être refroidi par le faisceau d'échange de chaleur 11, le flux refroidi étant ensuite réparti dans les canalisations de sortie du module d'échange pour être admis dans les cylindres du moteur auxquels les canalisations 6 sont respectivement connectées.

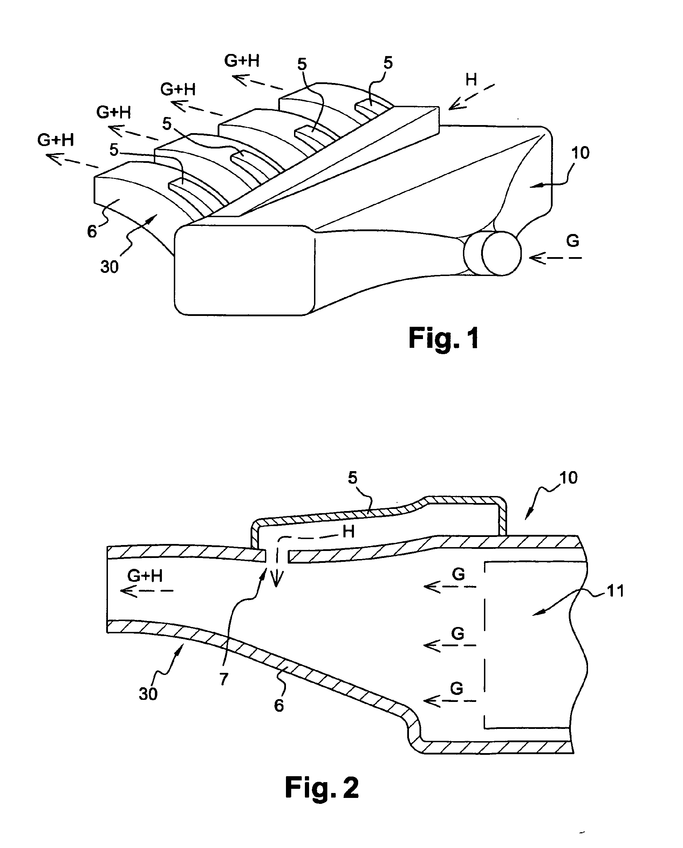

Chaque canalisation de sortie 6 du module d'échange de chaleur, dans laquelle circule le flux de gaz d'admission refroidi G, comprend un orifice 7 d'injection d'un flux de gaz d'échappement recirculés H, qui est injecté par une canalisation d'injection 5 connectée à la partie supérieure de la canalisation de sortie 6 du module d'échange au niveau dudit orifice d'injection 7, comme représenté sur la figure 2. Ainsi, le flux de gaz d'admission G et le flux de gaz d'échappement recirculés H se mélangent dans les canalisations de sortie 6 du module avant leur admission dans les cylindres du moteur. En pratique, la longueur de la canalisation entre la zone d'injection des gaz d'échappement recirculés H et la zone de combustion n'est pas suffisante pour permettre un mélange homogène des gaz, ce qui dégrade les performances du moteur. En outre, dans l'art antérieur, l'introduction du flux de gaz d'échappement recirculés H est réalisée de manière indépendante dans chaque canalisation de sortie 6 ; la concentration de gaz d'échappement recirculés H peut varier de manière importante entre les canalisations de sortie, ce qui est préjudiciable au fonctionnement du moteur, les cylindres du moteur admettant des mélanges de concentrations différentes.

Par ailleurs, le dispositif de mélange, formé par le module d'échange de chaleur et les canalisations d'injection 5 rapportées sur lui, présente un volume important. En outre, pour adapter une structure classique d'échangeur et y ajouter des canalisations d'injection de gaz d'échappement recirculés, il est nécessaire de modifier de façon importante la structure des modules d'échange existants ce qui entraîne des coûts supplémentaires.

Le document EP 1911346 A2 décrit un collecteur de répartition connu comprenant des moyens d'injection de gaz d'échappement et un échangeur de chaleur.

Le document US 4 135 481 décrit un système où une injection de gaz d'échappement recirculés de type « en rideau » a lieu dans une ligne d'admission d'un moteur.

Le problème à l'origine de l'invention est né dans le domaine des échangeurs de chaleur mais il concerne plus globalement tout dispositif de mélange d'un flux de gaz d'admission et d'un flux de gaz d'échappement dont la distance longitudinale de mélange est faible, que le dispositif de mélange comprenne un échangeur de chaleur ou en soit dépourvu.

C'est ainsi que l'invention concerne un dispositif de mélange d'un flux de gaz d'admission et d'un flux de gaz d'échappement recirculés selon la revendication 1.

De par la présence d'une pluralité d'orifices de diffusion, le flux de gaz recirculés est divisé en une pluralité de flux de gaz élémentaires qui sont injectés dans le flux de gaz d'admission, les flux de gaz élémentaires formant des zones élémentaires de turbulences favorisant l'homogénéisation du mélange. Les orifices de diffusion étant disposés sur le carter de guidage et dans sa zone définissant une veine de gaz unique, ils permettent de former un rideau de gaz recirculés composé d'une pluralité de flux élémentaires, le flux de gaz d'admission étant cisaillé par ces flux de gaz élémentaires à son passage. Ainsi, les gaz d'admission se mélangent mieux aux gaz recirculés lorsqu'ils traversent le rideau qu'ils forment transversalement à la direction principale de circulation du flux de gaz d'admission dans le carter de guidage, puisque des turbulences sont engendrées par le cisaillement du flux de gaz d'admission par les flux de gaz élémentaires de gaz recirculés.

Ainsi, on a résolu un problème lié à une insuffisance de distance longitudinale de mélange dans les canalisations en multipliant transversalement des points d'injection agencés pour cisailler le flux de gaz d'admission avec des flux élémentaires de gaz recirculés, ce qui permet d'accroître l'efficacité du mélange sur une longueur donnée. En outre, grâce à l'invention, les gaz d'échappement sont répartis de manière homogène entre les cylindres du moteur qui reçoivent donc des mélanges de gaz de concentrations identiques.

Le dispositif comporte un échangeur de chaleur avec un faisceau d'échange de chaleur de refroidissement de gaz, alimenté en gaz d'admission, l'échangeur de chaleur étant relié au collecteur pour l'alimenter en gaz d'admission refroidis.

Le dispositif de mélange selon l'invention permet de mélanger de manière homogène les deux flux de gaz malgré la proximité de l'échangeur de chaleur et de la culasse du moteur. Autrement dit, il autorise la mise en place d'un dispositif compact sans que cette compacité s'oppose à son efficacité. L'invention résout ainsi le problème, énoncé plus haut, spécifique aux dispositifs de mélange de gaz avec échangeur de chaleur à proximité d'un moteur de véhicule automobile.

Selon une forme de réalisation de l'invention, les moyens d'injection comprennent une fente d'injection grillagée dans laquelle sont formés lesdits orifices de diffusion, le grillage de la fente d'injection étant donc agencé pour diviser le flux de gaz recirculés en une pluralité de flux élémentaires de gaz recirculés aptes à se mélanger efficacement avec les gaz d'admission.

De préférence, le diamètre des orifices de diffusion est faible pour que la vitesse d'injection soit grande, par exemple leur diamètre est compris entre 3mm et 7mm, de préférence 5mm. Ainsi, les flux de gaz élémentaires sont injectés avec une vitesse suffisante pour cisailler correctement le flux de gaz d'admission tout en évitant un encrassement desdits orifices par des particules lourdes qui pourraient être comprises dans le flux de gaz recirculés.

Selon une forme de réalisation de l'invention, le carter de guidage présente une section polygonale, de préférence rectangulaire, transversalement à la direction principale de circulation des gaz dans le carter de guidage.

De préférence, au moins une paroi du carter, correspondant à au moins un côté du polygone dont sa section a la forme, comporte une pluralité d'orifices d'injection répartis le long de cette paroi. De tels orifices forment un rideau de flux de gaz élémentaires parallèles entre eux, permettant d'obtenir une certaine homogénéité transversale dans le mélange des gaz.

De préférence encore, au moins deux parois du carter, correspondant à au moins deux côtés du polygone dont sa section a la forme, comportent chacune au moins un orifice d'injection. La répartition d'orifices sur des parois distinctes permet d'engendrer plus de turbulences dans le flux de gaz d'admission, en particulier si ces parois sont perpendiculaires entre elles. En effet, l'injection de flux de gaz recirculés, dans le carter de guidage, de manière périphérique au flux de gaz d'admission et en plusieurs points, accroît les turbulences provoquées par l'injection et donc le mélange des gaz par convection; le mélange est donc plus homogène sur une longueur donnée de canalisation de mélange; comme la concentration du flux de gaz d'échappement recirculés est supérieure à proximité de la zone par laquelle il débouche dans le carter de guidage, une injection de gaz d'échappement recirculés sur plusieurs côtés permet d'uniformiser la concentration de gaz recirculés dans le flux de gaz refroidis et ainsi de favoriser l'homogénéisation du mélange, d'autant plus qu'elle provoque des turbulences liées à la confluence des flux élémentaires de gaz recirculés.

Par sensiblement polygonale pour la section du carter, on comprend une forme globale de polygone avec une pluralité de côtés, certains côtés ou certains coins entre côtés successifs pouvant être arrondis ou plus généralement curvilignes.

De manière avantageuse, la distance entre deux orifices de diffusion consécutifs est inférieure ou égale à deux fois le diamètre moyen desdits orifices de diffusion sur un même côté d'injection. La proximité des orifices de diffusion les uns par rapport aux autres permet, d'un point de vue global, de former un rideau plan de gaz recirculés, et d'un point de vue local, de former une pluralité de flux élémentaires de gaz recirculés parallèles et coplanaires aptes à diviser le flux de gaz d'admission en une pluralité de flux ou nappes élémentaires de gaz d'admission. Les flux élémentaires de gaz recirculés et de gaz d'admission se mélangent selon des zones de mélange élémentaires, locales et discrètes, ce qui favorise leur homogénéisation.

De préférence encore, le diamètre des orifices de diffusion est agencé pour permettre l'injection des gaz recirculés à travers le flux de gaz d'admission depuis un premier côté jusqu'à un deuxième côté, opposé au premier côté, du polygone dont la section du carter de guidage a la forme. Le cisaillement du flux de gaz d'admission par les gaz recirculés se fait bien ainsi d'un côté à l'autre du carter, ce qui participe à une bonne homogénéisation du mélange.

De manière avantageuse, l'injection du flux de gaz recirculés est réalisée sur au moins 50% de la périphérie totale du polygone dont la section du carter de guidage a la forme; autrement dit, la somme des diamètres des orifices d'injection représente au moins 50% du périmètre du polygone. La multiplicité des orifices, leur répartition à la périphérie du carter et leur orientation perpendiculaire au flux de gaz d'admission favorisent la formation de turbulences et améliorent l'homogénéisation du mélange.

Le faisceau d'échange de chaleur comprenant une face d'entrée des gaz à refroidir et une face de sortie des gaz refroidis, les moyens d'injection débouchent sur le carter de guidage au niveau de la face de sortie du faisceau d'échange de chaleur.

De la sorte, le flux de gaz d'échappement recirculés est injecté directement à la sortie du faisceau d'échange de chaleur, ce qui permet avantageusement de mélanger le flux de gaz d'échappement recirculés avec le flux de gaz d'admission refroidis avant que le mélange ne pénètre dans le collecteur de répartition. Ainsi, la distance de mélange est maximisée, le mélange se faisant dans le collecteur de répartition depuis la face de sortie du faisceau d'échange de chaleur jusqu'à la culasse du moteur, ce qui améliore encore le rendement de la combustion dans le moteur.

De préférence toujours, l'échangeur de chaleur comprend un carter d'échangeur et le collecteur comprend un carter de collecteur, les moyens d'injection étant agencés entre le carter d'échangeur et le carter de collecteur. Ainsi, les moyens d'injection sont agencés à l'interface entre l'échangeur de chaleur et le collecteur de répartition, ce qui permet de limiter l'encombrement global du dispositif de mélange. En outre, comme les moyens d'injection sont agencés à l'interface, il n'est pas nécessaire de modifier la structure d'un collecteur de répartition et d'un échangeur de chaleur existants pour permettre l'injection du flux de gaz d'échappement recirculés par l'adjonction de moyens d'injection.

Selon une forme de réalisation préférée de l'invention, les moyens d'injection comportent au moins une canalisation, de préférence globalement cylindrique, débouchant sur les orifices de diffusion.

De préférence, cette dernière est formée de deux demi-coquilles de formes complémentaires, avantageusement respectivement formées sur le carter d'échangeur et le carter de collecteur, chaque demi-coquille étant monobloc avec le carter sur lequel elle est formée. Ainsi, il suffit de relier le collecteur de répartition à l'échangeur de chaleur pour former les moyens d'injection, la canalisation d'injection étant formée par complémentarité de formes des demi-coquilles appartenant aux carters de collecteur et d'échangeur.

De préférence encore, une première demi-coquille possède une forme plane et la deuxième demi-coquille possède une forme globalement cylindrique de section sensiblement en U par rapport à l'axe selon lequel elle s'étend, la première demi-coquille venant en appui sur les parois correspondant aux branches du U, la branche interne du U, la plus proche de la zone de circulation des gaz d'admission dans le carter de guidage, comprenant une pluralité d'orifices de diffusion débouchant dans la zone de circulation des gaz d'admission dans le carter de guidage.

L'invention sera mieux comprise à l'aide de la description suivante de la forme de réalisation préférée du dispositif de l'invention, en référence au dessin annexé, sur lequel :
- la figure 1 représente une vue en perspective d'un dispositif de mélange de gaz dans une culasse de moteur selon l'art antérieur;
- la figure 2 représente une vue en coupe longitudinale du dispositif de la figure 1, la coupe étant réalisée selon la direction principale de circulation des gaz dans le dispositif ;
- la figure 3 représente une vue en perspective du dispositif de mélange de gaz dans une culasse de moteur selon l'invention, le dispositif étant vu sensiblement de dessus ;
- la figure 4 représente une vue en coupe longitudinale du dispositif de la figure 3 sans son collecteur d'entrée, la coupe étant réalisée selon la direction principale de circulation des gaz dans le dispositif ;
- la figure 5 représente une vue en perspective du dispositif de la figure 3, le dispositif étant vu sensiblement de côté ;
- la figure 6 représente une vue schématique du dispositif de l'invention dans lequel est représentée la pluralité d'orifices de diffusion ;
- la figure 7 représente une autre vue schématique du dispositif de la figure 6 dans lequel sont représentés les flux élémentaires de gaz recirculés dans le carter du dispositif et
- la figure 8 représente une vue en perspective d'une autre forme de réalisation d'un dispositif de mélange de gaz selon l'invention.

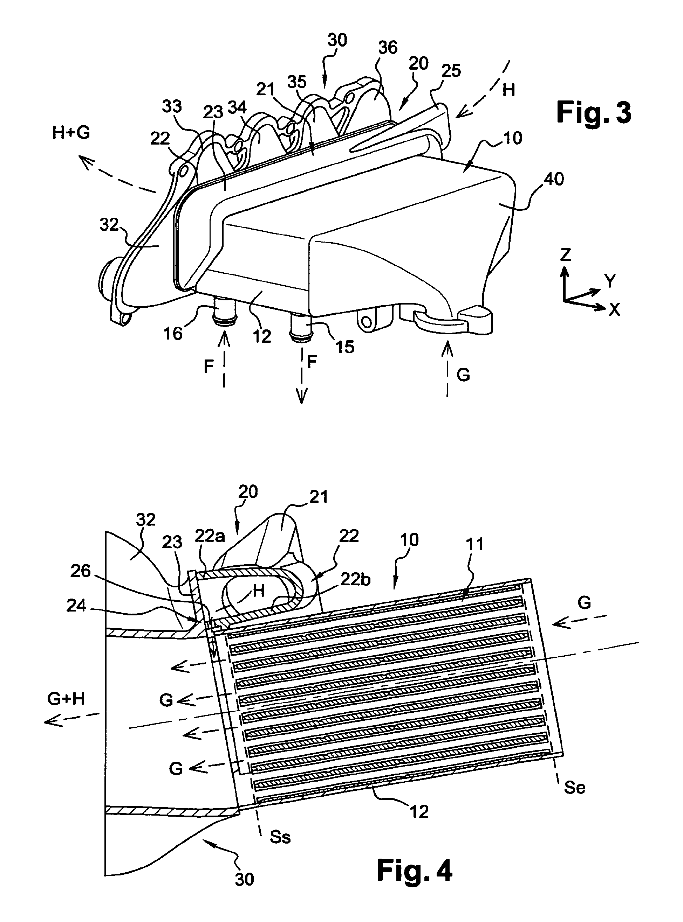

En référence à la figure 3, un dispositif 1 de mélange d'un flux de gaz dans la culasse d'un moteur thermique de véhicule automobile (non représenté) comporte un échangeur de chaleur 10 comprenant un faisceau d'échange de chaleur 11 agencé pour échanger de la chaleur avec un premier flux de gaz (G), ici des gaz d'admission comportant de l'air, circulant dans le faisceau d'échange de chaleur 11.

Par la suite, on définit les termes « amont » et « aval » par rapport au sens de circulation du flux de gaz d'admission (G) dans le dispositif de mélange 1, les gaz d'admission (G) circulant de l'amont vers l'aval dans le dispositif 1 selon une direction X de circulation des gaz représentée sur les figures 3 et 4.

Les gaz d'admission (G) sont introduits dans l'échangeur de chaleur 10 par un collecteur d'entrée 40, monté en amont de l'échangeur de chaleur 10, et évacués par un collecteur de sortie, également dénommé collecteur de répartition 30, monté en aval de l'échangeur de chaleur 10 et destiné à être relié à la culasse du moteur. Le dispositif de mélange 1 comporte un carter de guidage des gaz, présentant une section polygonale transversalement à la direction X de circulation des gaz (G) dans le carter de guidage, agencé pour guider les gaz d'amont en aval dans le dispositif de mélange 1.

Le collecteur de répartition 30 est monté sur la culasse du moteur. Le collecteur de répartition 30 permet une admission répartie, dans la culasse, du flux de gaz refroidi (G) issu de l'échangeur de chaleur 10.

Le dispositif de mélange 1 comprend en outre des moyens d'injection 20 d'un flux de gaz d'échappement recirculés du moteur (H), connus de l'homme du métier sous son abréviation anglaise « EGR » correspondant à « Exhaust Gas recirculation ». Les moyens d'injection 20 comprennent une pluralité d'orifices de diffusion débouchant sur le carter de guidage, lesdits orifices de diffusion s'étendant sensiblement dans un même plan et étant agencés pour injecter le flux de gaz d'échappement recirculés (H) perpendiculairement à la direction principale X de circulation des gaz (G) dans le carter de guidage.

Le carter de guidage comporte au moins une portion (amont) définissant une veine de gaz (amont) unique pour l'ensemble des gaz, ainsi en l'espèce qu'une portion (aval) définissant une pluralité de veines de gaz (aval) communiquant avec ladite veine de gaz amont ; lesdites veines aval communiquant avec les cylindres du moteur vers lesquels les gaz sont répartis par le collecteur de répartition. Les orifices de diffusion sont agencés au niveau de la portion amont du carter de guidage définissant la veine de gaz unique; ainsi, ils coopèrent pour mieux cisailler l'écoulement de cette veine de gaz et ainsi mieux homogénéiser les gaz d'admission et les gaz recirculés en amont de la répartition des gaz dans les cylindres.

Afin de bien comprendre l'invention, chaque élément du dispositif de mélange selon l'invention va être décrit individuellement aussi bien dans sa structure que dans sa fonction.

### - Echangeur de chaleur

En référence aux figures 3 et 4, l'échangeur de chaleur 10 comprend un carter d'échangeur 12 enveloppant le faisceau d'échange de chaleur 11 comportant une pluralité d'éléments d'échange empilés. Les espaces entre les éléments d'échange du faisceau 11 forment des canaux de conduite du flux de gaz à refroidir (G), ici les gaz d'admission. Les éléments d'échange du faisceau 11 sont creux et conduisent un fluide caloporteur (F), destiné à échanger de la chaleur avec le flux de gaz à refroidir (G) circulant d'amont en aval dans les canaux de conduite de fluide.

Le faisceau d'échange de chaleur 11 se présente sous la forme d'un parallélépipède s'étendant dans sa longueur selon la direction X de circulation des gaz et comprenant une face d'entrée amont Se par laquelle sont introduits les gaz d'admission à refroidir (G) et une face de sortie aval Ss par laquelle sont évacués les gaz d'admission refroidis (G), comme représenté sur la figure 3.

Le carter d'échangeur 12, dans lequel est logé le faisceau d'échange de chaleur 11, se présente sous la forme d'un parallélépipède, s'étendant dans sa longueur selon la direction X de circulation des gaz, dont les faces amont et aval sont ouvertes pour permettre respectivement l'entrée et la sortie des gaz (G) dans le faisceau d'échange de chaleur 11.

En référence à la figure 4, la longueur du faisceau d'échange de chaleur 11 est sensiblement égale à celle du carter 12 dans lequel le faisceau 11 est logé. Le faisceau d'échange de chaleur 11 est ainsi affleurant de part et d'autre du carter 12, les faces de sortie et d'entrée du faisceau 11 et du carter d'échangeur 12 étant alors sensiblement confondues.

Par la suite, on définit les termes « supérieur », « inférieur », « gauche » et « droite » par rapport à l'orientation du dispositif de mélange 1 représenté en perspective sur la figure 3 et conformément au repère orthogonal d'axes (X , Y, Z), l'axe X étant orienté de l'amont vers l'aval et correspondant à la direction X d'écoulement des gaz, l'axe Y étant orienté de la gauche vers la droite et l'axe Z étant orienté du bas vers le haut, c'est à dire de la partie inférieure du dispositif vers sa partie supérieure. Ainsi, le carter d'échangeur 12 présente quatre côtés (ou parois) : un côté supérieur, un côté inférieur, un côté gauche et un côté droite ; seuls les côtés supérieur et gauche sont visibles sur la figure 3.

Le fluide caloporteur (F) est introduit dans le faisceau d'échange de chaleur 11 par une tubulure d'entrée 16 ménagée sur le côté inférieur du carter d'échangeur 12, chaque élément d'échange du faisceau 11 étant relié de manière fluidique à la dite tubulure d'entrée 16. Après circulation dans le faisceau d'échange de chaleur 11, le fluide caloporteur (F) est évacué par une tubulure de sortie 15 ménagée sur le même côté du carter d'échangeur 12 comme représenté sur la figure 3.

Le faisceau d'échange de chaleur 11 possède une surface transversale de refroidissement sensiblement rectangulaire. Ainsi, à la sortie du faisceau d'échange de chaleur 11, le flux de gaz d'admission refroidi (G) est de section rectangulaire transversalement à la direction X de circulation des gaz.

### - Collecteur d'entrée

Le collecteur d'entrée 40, représenté sur la figure 3, permet de guider et de répartir le flux de gaz à refroidir (G) sur la surface totale de la face d'entrée Se du faisceau d'échange de chaleur 11. A cet effet, le collecteur d'entrée 40 se présente sous la forme d'un carter sensiblement évasé de l'amont vers l'aval dont l'extrémité aval est reliée à l'extrémité amont du carter d'échangeur 12. Le collecteur d'entrée 40 comporte une face de sortie débouchant sur la face d'entrée de l'échangeur de chaleur 10, et un orifice d'entrée par lequel sont introduits les gaz d'admission à refroidir (G) dans le collecteur d'entrée 40.

Le collecteur d'entrée 40 est conformé de manière à ce que la direction du flux de gaz à refroidir (G) entrant dans le faisceau d'échange de chaleur 11 soit confondue avec la direction X selon laquelle s'étend le faisceau d'échange de chaleur 11. A cet effet, en référence à la figure 3, le collecteur d'entrée 40 est coudé à 90° de manière à ce que la direction d'écoulement du flux de gaz (G) entrant par l'orifice d'entrée du collecteur d'entrée 40, ici perpendiculairement à la direction X de circulation des gaz dans le faisceau 11, soit modifiée de manière à ce que le flux de gaz (G) entrant finalement dans le faisceau d'échange de chaleur 11 s'écoule dans la direction X de circulation des gaz dans le faisceau 11; autrement dit, le flux de gaz est redressé dans le collecteur d'entrée 40.

L'orientation de l'orifice d'entrée du collecteur d'entrée 40 peut varier, l'important étant que le flux d'air à refroidir (G) pénètre dans le faisceau 11 selon la bonne direction X de circulation des gaz.

### - Collecteur de répartition

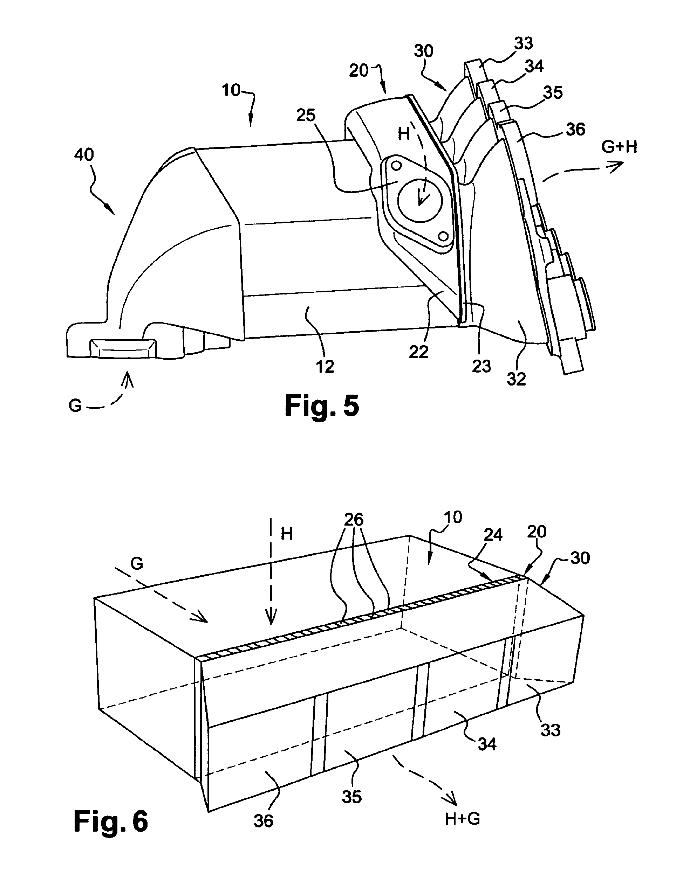

Le collecteur de répartition 30, monté en aval de l'échangeur de chaleur 10, comprend une partie amont avec une face amont, sur laquelle débouche la face de sortie Ss du faisceau d'échange de chaleur 11, et une partie aval destinée à être fixée sur la culasse du moteur. Le collecteur 30 est une chambre de sortie de l'échangeur 10 et une chambre d'entrée pour la culasse. Comme évoqué plus haut, la partie amont définit une unique veine de gaz et la partie aval définit une pluralité de veines de gaz. Plus précisément, la partie aval du collecteur de répartition 30 comprend ici huit canaux de sortie agencés pour déboucher respectivement dans quatre cylindres d'admission du moteur (deux par cylindre), seuls les canaux supérieurs 33, 34, 35, 36 étant visible sur les figures 3 et 5. Ainsi, les gaz admis par la face amont du collecteur de répartition 30 sont répartis dans les huit canaux de sortie afin d'alimenter les cylindres du moteur en gaz pour leur combustion.

Le collecteur de répartition 30 comprend un carter de collecteur 32 guidant les gaz introduits de la face amont du collecteur 30 jusqu'à la culasse du moteur. Le carter de collecteur 32 est sensiblement évasé de l'amont vers l'aval et comporte une face amont ouverte de section rectangulaire transversalement à la direction X de circulation des gaz.

Le dispositif de mélange 1 comporte en l'espèce deux carters de guidage des gaz dans le dispositif 1, à savoir le carter d'échangeur 12 et le collecteur de répartition 32. Pour simplifier la description, et dans la mesure où ces deux carters forment en fait globalement un carter de guidage des gaz, on parlera du carter de guidage des gaz pour désigner l'un ou l'autre ou les deux. Lorsqu'il s'agira de décrire des caractéristiques plus spécifiques de l'un d'entre eux, sa terminologie propre sera utilisée. On note d'ailleurs à cet égard qu'un unique carter de guidage des gaz pourrait être prévu, servant à la fois de carter de guidage des gaz dans l'échangeur et de carter de guidage des gaz dans le collecteur.

### - Moyens d'injection

En référence aux figures 3 et 4, le carter de collecteur 32 et le carter d'échangeur 12 présentent en l'espèce chacun une section rectangulaire transversalement à la direction X de circulation des gaz (G), ces carters formant le carter de guidage du dispositif. Les moyens d'injection 20 débouchent sur le carter de guidage au niveau d'une pluralité d'orifices de diffusion, lesdits orifices de diffusion s'étendant sensiblement dans un même plan et étant agencés pour injecter le flux de gaz d'échappement recirculés (H) perpendiculairement à la direction X de circulation des gaz (G) dans le carter de guidage. Les orifices de diffusion sont prévus dans la partie amont du carter de guidage, c'est-à-dire dans la portion du carter de guidage dans laquelle les gaz sont guidés selon une veine unique.

En référence à la figure 4, les moyens d'injection 20 se présentent en l'espèce sous la forme d'une canalisation globalement cylindrique 21, s'étendant transversalement à la direction X de circulation des gaz et comprenant une fente grillagée 24 débouchant entre le carter d'échangeur 12 et le carter de collecteur 32 afin d'injecter le flux de gaz d'échappement recirculés (H) dans le flux de gaz refroidis (G) selon une pluralité d'orifices de diffusion.

En référence aux figures 3 et 4, afin de répartir les gaz d'échappement (H) de manière homogène lors de leur injection, la fente 24 de la canalisation d'injection 21 débouche sur trois côtés du carter de guidage. Toujours en référence à la figure 3, la canalisation d'injection 21 comprend une partie de canalisation latérale gauche 21g, une partie de canalisation supérieure 21 h et une partie de canalisation latérale droite 21 d.

Le flux de gaz d'admission refroidis (G), de section rectangulaire, est ainsi cisaillé par des flux de gaz d'échappement (H) débouchant de manière bien répartie à la périphérie du carter de guidage, le long de trois de ses côtés.

Il va de soi que la canalisation d'injection 21 peut s'étendre sur un, deux ou quatre côtés du rectangle dont la section du carter de guidage a la forme, les côtés étant de préférence consécutifs s'il y en a plusieurs.

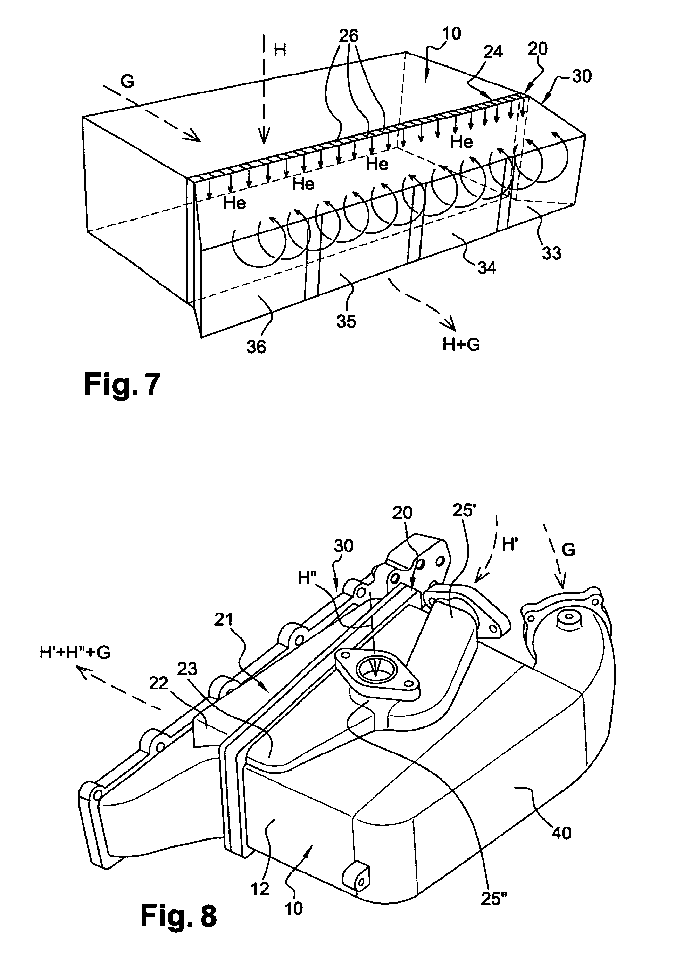

Sur les schémas des figures 6 et 7, la fente grillagée 24 du dispositif de mélange selon l'invention n'est représentée que sur le côté supérieur du carter de guidage afin de faciliter la lecture desdits schémas.

En référence à la figure 6, le flux de gaz recirculés (H) issu de la canalisation cylindrique 21 (non représentée sur la figure 6) est injecté dans le carter de guidage via la fente grillagée 24 dans laquelle sont formée des orifices de diffusion 26, ces derniers étant orientés perpendiculairement à la direction du flux de gaz d'admission (G) dans le carter de guidage. Cela permet avantageusement de favoriser le cisaillement du flux de gaz refroidis (G) par le flux de gaz d'échappement (H).

Les moyens d'injection 20 sont ici agencés pour injecter le flux de gaz d'échappement recirculés (H) dans le flux de gaz refroidis (G), à la sortie du faisceau d'échange de chaleur 11, de manière à ce que les deux flux de gaz (G, H) se mélangent à l'entrée du collecteur de sortie 30, permettant au mélange des deux gaz (G, H) ainsi formé de s'homogénéiser au fur et à mesure de sa circulation dans le collecteur de sortie 30. Le mélange de gaz (G, H) admis dans les cylindres du moteur est homogène et les performances de combustion du moteur sont améliorées.

Toujours en référence à la figure 6, les orifices de diffusion 26 sont répartis dans un même plan transversalement à la direction X de circulation des gaz (G), désigné plan de diffusion. Le plan de diffusion est situé dans la partie amont du carter de guidage dans laquelle les gaz s'écoulent dans une veine unique. Au cours de l'injection, les gaz d'échappement injectés (H) viennent cisailler le flux de gaz refroidis (G), ce qui engendre des turbulences à la sortie du faisceau d'échange de chaleur 11, favorisant l'homogénéisation du mélange dans le plan transversal de diffusion. Ainsi, contrairement à l'art antérieur, le mélange est homogénéisé dès l'injection dans le plan de diffusion, la circulation du mélange dans le collecteur de répartition venant parachever son homogénéisation.

En référence à la figure 6, les orifices de diffusion 26 sont en l'espèce répartis sur la longueur du côté supérieur du rectangle dont la section du carter de guidage a la forme; ils sont en l'espèce répartis de manière uniforme. De préférence, la distance entre deux orifices de diffusion 26 consécutifs est inférieure ou égale à deux fois le diamètre moyen des orifices de diffusion 26 sur un même côté d'injection.

Autrement dit, selon un même côté d'injection du carter, au moins un tiers de la longueur dudit côté est formée d'orifices de diffusion 26, de préférence la moitié. Ainsi, la densité linéaire d'orifices de diffusion sur un côté d'injection du carter est importante. Cela favorise la formation d'un rideau plan de gaz recirculés composé d'un grand nombre de flux élémentaires de gaz recirculés (He), comme représenté sur la figure 7.

De par l'orientation des orifices de diffusion 26, les flux élémentaires de gaz recirculés (He) sont parallèles les uns aux autres et orientés perpendiculairement au flux de gaz d'admission (G) dans le carter de guidage. Dans la zone de convergence, des turbulences (représentées par des flèches curvilignes sur la figure 7) se forment entre les flux élémentaires de gaz recirculés (He) et le flux de gaz d'admission (G), favorisant l'homogénéisation du mélange.

Par ailleurs, afin d'augmenter les turbulences et l'effet de cisaillement, le diamètre des orifices de diffusion 26 est ménagé de manière à permettre une injection des flux élémentaires de gaz d'échappement (He) à haute vitesse, permettant ainsi aux flux élémentaires (He) de traverser de part en part le flux de gaz d'admission refroidis (He). Autrement dit, le diamètre des orifices 26 de la fente grillagée 24 de la canalisation d'injection 21 est dimensionné de manière à permettre aux flux élémentaires de gaz d'échappement (He) d'atteindre le côté du carter de guidage opposé au côté du carter dans lequel débouche les orifices de diffusion 26. En d'autres termes, les flux élémentaires de gaz d'échappement (He) forment un rideau de gaz s'étendant transversalement à la direction de circulation des gaz d'admission (G) dans le carter de guidage.

Pour un débit de gaz recirculés constant, plus le diamètre des orifices de diffusion 26 de la canalisation d'injection 21 est faible (avec bien entendu une limite inférieure), plus la vitesse d'injection des gaz recirculés (H) est importante.

Cependant, un orifice de diffusion 26 dont le diamètre est faible est sujet à l'encrassement en raison des particules lourdes (suie, etc.) en suspension dans le flux de gaz d'échappement (H). A cet effet, un diamètre d'orifice de diffusion compris entre 3mm et 7mm, de préférence égal à 5mm, assure un compromis entre une vitesse d'injection suffisante et une limitation des risques d'encrassement. Le diamètre d'ouverture des orifices de diffusion 26 est déterminé dans cette plage en fonction de la nature des gaz d'échappement (H). Plus les gaz d'échappement (H) comprennent de particules lourdes - on dit que les gaz d'échappement sont « chargés » - plus le diamètre des orifices de diffusion 26 est important pour limiter le risque d'encrassement.

En référence aux figures 6 et 7, les moyens d'injection 20 débouchent sur le carter de guidage au niveau de la face de sortie du faisceau d'échange de chaleur 11. Ainsi, les moyens d'injection 20, formés extérieurement au carter de guidage, injectent un flux de gaz d'échappement recirculés (H) dans le flux de gaz d'admission refroidis (G) circulant dans ledit carter de guidage. Au niveau de la zone de confluence des deux flux (G, H), des turbulences se créent, ce qui favorise l'homogénéisation dudit mélange. De plus, cette zone de confluence est située à l'extrémité amont du collecteur de répartition 30 ce qui permet aux gaz de continuer à se mélanger au cours de leur circulation dans le collecteur de répartition 30 et ce, sur toute sa longueur et non pas, comme cela était le cas dans le dispositif de mélange selon l'art antérieur représenté sur les figures 1 et 2, uniquement sur une partie de sa longueur.

Dans la forme de réalisation représentée sur la figure 3, on tire parti de l'aspect modulaire du dispositif de mélange 1 en formant les moyens d'injection 20 entre le carter d'échangeur 12 et le carter de collecteur 32. Les moyens d'injection 20 sont formés à l'interface entre le collecteur 30 et l'échangeur de chaleur 10 afin de limiter l'encombrement global du dispositif de mélange 1 tout en permettant un mélange homogène.

Il va de soi que les moyens d'injection 20 peuvent être ménagés en aval de la face de sortie du faisceau d'échange de chaleur, que ce soit dans le carter d'échangeur 12 ou le carter de collecteur 32. L'invention s'applique à tout type de carter de guidage, sa forme, sa matière ou ses dimensions important peu. En outre, le carter de guidage des gaz peut être composé de plusieurs éléments (ou modules) ou d'un seul élément, le carter de guidage étant alors monobloc (comme déjà envisagé ci-dessus).

En référence aux figures 3 et 5, la canalisation d'injection 21 comprend un orifice 25 d'entrée des gaz d'échappement recirculés (H) dans la canalisation d'injection 21.

Une deuxième forme de réalisation d'un dispositif de mélange selon l'invention est décrite en référence à la figure 8. Les références utilisées pour décrire les éléments du dispositif, de structure ou fonction identique, équivalente ou similaire à celles des éléments du dispositif de la figure 3 sont les mêmes, pour simplifier la description. D'ailleurs, l'ensemble de la description du mode de réalisation de la figure 3 n'est pas reprise, cette description s'appliquant aux éléments de la figure 8 lorsqu'il n'y a pas d'incompatibilités. Seules les différences notables, structurelles et fonctionnelles, sont décrites.

Selon la forme de réalisation représentée à la figure 8, la canalisation d'injection pourrait comporter deux orifices d'injection 25', 25" destinés à permettre l'introduction simultanée ou alternée de deux flux de gaz d'échappement recirculés H', H" de natures différentes ou identiques. En l'occurrence, les flux de gaz d'échappement recirculés peuvent être refroidis ou non, à haute pression ou basse pression. Une injection de gaz d'échappement recirculés de natures différentes permet de modifier la nature du comburant dans les cylindres du moteur et ainsi de modifier les performances du moteur lors de son fonctionnement à faible charge ou forte charge.

Dans la première forme de réalisation de l'invention, en référence à la figure 4, la canalisation cylindrique 21 est formée de deux demi-coquilles complémentaires 22, 23 respectivement formées sur le carter d'échangeur 12 et le carter de collecteur 32, chaque demi-coquille étant monobloc avec le carter sur lequel elle est formée. L'encombrement du dispositif 1 est ainsi fortement réduit.

Par ailleurs, grâce à une telle configuration, le procédé de montage du dispositif de mélange ne nécessite pas d'étapes supplémentaires en comparaison au montage d'un dispositif de mélange classique dépourvu de moyens d'injection d'un flux de gaz d'échappement (G). En effet, la liaison du carter d'échangeur 12 avec le carter de collecteur 32 permet de former, par complémentarité de formes des demi-coquilles 22, 23, la canalisation d'injection de gaz 21, sans étape supplémentaire de montage.

De manière structurelle, en référence à la figure 4, la première demi-coquille 23, formée à l'extrémité amont du carter 32 du collecteur de répartition 30, présente une forme plane et s'étend dans un plan transversal à la direction X de circulation du flux de gaz d'admission dans le faisceau d'échange de chaleur 11.

Etant donné que la canalisation d'injection 21 s'étend sur trois côtés du carter de guidage dans la forme de réalisation représentée sur les figures 3 et 4, la demi-coquille 23, qui forme la partie aval de cette canalisation 21, s'étend sur trois côtés du carter de collecteur 32.

Ainsi, l'extrémité amont du carter 32 comprend un bord latéral gauche, un bord supérieur et un bord latéral droit sur lesquels est ménagé la première demi-coquille 23, dite demi-coquille aval 23, cette dernière s'étendant sensiblement dans le plan d'interface entre le collecteur 30 et l'échangeur 20, extérieurement à la zone de circulation des gaz dans le collecteur 30.

De même, la deuxième demi-coquille 22, dite demi-coquille amont 22, qui forme la partie amont de la canalisation 21, s'étend sur trois côtés du carter d'échangeur 12. L'extrémité aval du carter 12 comprend un bord latéral gauche, un bord supérieur et un bord latéral droit sur lesquels est ménagée la deuxième demi-coquille 22, cette dernière s'étendant extérieurement à la zone de circulation des gaz dans l'échangeur de chaleur 10.

La demi-coquille amont 22, formée à l'extrémité aval du carter de l'échangeur 12, possède une forme globalement cylindrique de section sensiblement en U ouverte du côté aval de manière à correspondre, par complémentarité de formes, avec la première demi-coquille 23 formée sur le carter du collecteur 32.

En référence à la figure 4, les branches du U, dont la demi-coquille amont 22 a la forme, sont de longueurs sensiblement identiques. On distingue une branche externe 22a, la plus éloignée de la zone de circulation des gaz d'admission (G) dans l'échangeur de chaleur 10, correspondant à une paroi destinée à entrer en contact étanche avec la première demi-coquille 23 formée sur le carter du collecteur 32, et une branche interne 22b, la plus proche de la zone de circulation des gaz d'admission (G) dans l'échangeur de chaleur 10, correspondant à une paroi destinée à entrer également en contact étanche avec la première demi-coquille 23.

En référence à la figure 4, la branche interne 22b comprend une pluralité d'orifices de diffusion 26, débouchant sur le carter de guidage au niveau d'orifices correspondants (ou d'une fente correspondante) du carter de guidage du dispositif, alignés selon la direction de la canalisation d'injection 21. Les orifices de diffusion 26 sont ici usinés dans la paroi de la branche interne 22b et possèdent une section sensiblement circulaire.

Lors de l'assemblage du collecteur de répartition 30 en aval de l'échangeur de chaleur 10, les parois correspondant aux branches interne et externe du U de la deuxième demi-coquille 22 viennent en contact sur la surface plane de la première demi-coquille 23 le long du côté latéral gauche, du côté supérieur et du côté latéral droit, le bord inférieur du carter d'échangeur 12 venant en contact avec le bord inférieur du carter de collecteur 32 afin d'assurer un contact étanche à l'interface entre le collecteur de répartition 30 et l'échangeur de chaleur 10.

Les deux demi-coquilles 22, 23 coopèrent par complémentarité de formes pour former la canalisation d'injection 21 qui s'étend sur trois côtés du carter de guidage. Les orifices de diffusion 26 ménagés sur la branche interne 22b de la demi-coquille amont 22 débouchent à l'interface entre les deux carters 12, 32, sans nécessiter d'étapes d'assemblage supplémentaires.

Le collecteur de répartition 30 et l'échangeur de chaleur 10 sont solidarisés l'un à l'autre, de préférence par soudage ou brasage.

De manière similaire, le collecteur d'entrée 40 est solidarisé à l'échangeur de chaleur 10, l'extrémité amont de l'échangeur 10 étant soudée à l'extrémité aval du collecteur d'entrée 40.

Il va de soi que différentes formes peuvent être prévues pour la section des orifices de diffusion 26; elle peut par exemple être de forme rectangulaire, ovale ou autre. En outre, une extrémité de la branche interne 22 peut être conformée de manière à former un bord de contact crénelé avec la demi-coquille aval 23 de la canalisation 21, les orifices de diffusion 26 étant formés entre les créneaux du bord de contact et la paroi plane 23.

Il va de soi que l'on pourrait former les orifices de diffusion 26 directement sur le carter d'échangeur 12 ou sur le carter de collecteur 32.

### - Mise en oeuvre

Au cours du fonctionnement du dispositif de mélange selon l'invention, un flux de gaz d'admission à refroidir (G) est introduit par l'orifice d'entrée du collecteur d'entrée 40 et circule d'amont en aval dans le faisceau d'échange de chaleur 11, selon la direction X de circulation des gaz, pour être refroidi.

Au niveau de la face de sortie Ss du faisceau d'échange de chaleur 11, le flux de gaz d'admission refroidis (G) est cisaillé par les flux élémentaires de gaz d'échappement recirculés (H) injectés selon la pluralité d'orifices de diffusion 26 perpendiculairement à la direction du flux de gaz refroidis selon trois côtés du carter de guidage. Les turbulences générées par le cisaillement dans la zone de confluence des gaz (H, G) favorisent le mélange des flux de gaz pour former un flux de gaz homogène conduit en aval dans les cylindres du moteur via le collecteur de répartition 30.

Ainsi, le dispositif selon l'invention permet d'obtenir un mélange homogène des gaz admis dans la culasse du moteur malgré la proximité de l'échangeur de chaleur par rapport à la culasse. Autrement dit, il permet d'allier compacité, efficacité et rendement. En outre, le dispositif peut être monté de manière simple et rapide.

L'invention est particulièrement avantageuse dans son application aux dispositifs de mélange avec un échangeur de chaleur, comme évoqué en introduction. Elle s'applique plus généralement à tout dispositif de mélange qu'il soit ou non pourvu d'un échangeur de chaleur. L'invention s'applique, par exemple, à une ligne d'admission, destinée à alimenter les cylindres d'un moteur, dans laquelle circule un mélange d'au moins deux gaz ne nécessitant pas d'être refroidis ou chauffés avant leur admission dans les cylindres.

## Revendications

1. Dispositif de mélange d'un flux de gaz d'admission et d'un flux de gaz d'échappement recirculés en vue de leur admission dans la culasse d'un moteur thermique de véhicule automobile, le dispositif comportant :
- un collecteur (30) de répartition des gaz dans la culasse, alimenté en gaz d'admission (G),
- des moyens (20) d'injection de gaz d'échappement recirculés du moteur (H) dans le flux de gaz (G) d'admission, et
- au moins un carter de guidage des gaz dans le dispositif de mélange, les gaz circulant dans le carter de guidage selon une direction principale (X), le carter comportant au moins une portion définissant une veine de gaz unique pour l'ensemble des gaz, et,
- un échangeur de chaleur (10) avec un faisceau d'échange de chaleur (11) de refroidissement de gaz (G), alimenté en gaz d'admission, l'échangeur de chaleur étant relié au collecteur (30) pour l'alimenter en gaz d'admission refroidis
dispositif **caractérisé en ce que**
- les moyens d'injection (20) comprennent une pluralité d'orifices de diffusion (26) débouchant sur le carter de guidage dans sa portion définissant une veine de gaz unique,
- lesdits orifices de diffusion (26) s'étendant sensiblement dans un même plan transversal à la direction (X) et étant agencés pour injecter le flux de gaz d'échappement recirculés (H) perpendiculairement à la direction principale (X) de circulation des gaz (G) dans le carter de guidage,
- le faisceau d'échange de chaleur (11) comprenant une face d'entrée des gaz à refroidir et une face de sortie des gaz refroidis, les moyens d'injection (20) débouchant sur le carter de guidage au niveau de la face de sortie du faisceau d'échange de chaleur (11).

2. Dispositif selon la revendication 1, dans lequel les moyens d'injection (20) comprennent une fente d'injection grillagée (24) dans laquelle sont formés lesdits orifices de diffusion (26).

3. Dispositif selon l'une des revendications 1 à 2, dans lequel le diamètre des orifices de diffusion (26) est faible pour que la vitesse d'injection soit grande, par exemple leur diamètre est compris entre 3mm et 7mm, de préférence 5mm.

4. Dispositif selon l'une des revendications 1 à 3, dans lequel le carter de guidage présente une section polygonale, de préférence rectangulaire, transversalement à la direction principale (X) de circulation des gaz (G) dans le carter de guidage.

5. Dispositif selon la revendication 4, dans lequel au moins une paroi du carter, correspondant à au moins un côté du polygone dont sa section a la forme, comporte une pluralité d'orifices d'injection (26) répartis le long de cette paroi.

6. Dispositif selon l'une des revendications 4 ou 5, dans lequel au moins deux parois du carter, correspondant à au moins deux côtés du polygone dont sa section a la forme, comportent chacune au moins un orifice d'injection (26).

7. Dispositif selon l'une des revendications 5 ou 6, dans lequel le diamètre des orifices de diffusion (26) est agencé pour permettre l'injection des gaz recirculés (H) depuis un premier côté jusqu'à un deuxième côté, opposé au premier côté, du polygone dont la section du carter de guidage a la forme.

8. Dispositif selon l'une des revendications 4 à 7, dans lequel l'injection du flux de gaz recirculés (H) est réalisée sur au moins 50% de la périphérie totale du polygone dont la section du carter de guidage a la forme.

## Patentansprüche

1. Vorrichtung zum Mischen eines Einlassgasstroms und eines rückgeführten Abgasstroms, um sie in den Zylinderkopf einer Brennkraftmaschine eines Kraftfahrzeugs einzuleiten, wobei die Vorrichtung Folgendes umfasst:
- einen Sammler (30) für die Verteilung der Gase in dem Zylinderkopf, der mit Einlassgas (G) versorgt wird,
- Mittel (20) zum Einleiten rückgeführter Abgase der Maschine (H) in den Einlassgasstrom (G) und
- wenigstens ein Gehäuse zum Führen der Gase in der Mischvorrichtung, wobei die Gase in dem Führungsgehäuse längs einer Hauptrichtung (X) zirkulieren, wobei das Gehäuse wenigstens einen Abschnitt aufweist, der eine einzige Gasrückführungsleitung für alle Gase definiert, und
- einen Wärmetauscher (10) mit einem Wärmeaustauschbündel (11) zum Kühlen der Gase (G), der mit Einlassgas versorgt wird, wobei der Wärmetauscher mit dem Sammler (30) verbunden ist, um ihn mit gekühltem Einlassgas versorgen,
wobei die Vorrichtung **dadurch gekennzeichnet ist, dass**
- die Einleitungsmittel (20) mehrere Diffusionsöffnungen (26) aufweisen, die in das Führungsgehäuse in dessen Abschnitt, der eine einzige Gasrückführungsleitung definiert, münden,
- die Diffusionsöffnungen (26) sich im Wesentlichen in derselben Ebene quer zu der Richtung (X) erstrecken und dafür ausgelegt sind, den Strom rückgeführter Abgase (H) senkrecht zu der Hauptrichtung (X) der Zirkulation der Gase (G) in dem Führungsgehäuse einzuleiten,
- das Wärmeaustauschbündel (11) eine Fläche für den Eintritt der zu kühlenden Gase und eine Fläche für den Austritt der zu kühlenden Gase aufweist, wobei die Einleitungsmittel (20) in das Führungsgehäuse auf Höhe der Austrittsfläche des Wärmeaustauschbündels (11) münden.

2. Vorrichtung nach Anspruch 1, wobei die Einleitungsmittel (20) einen mit einem Gitter versehenen Einleitungsschlitz (24) umfassen, in dem die Diffusionsöffnungen (26) ausgebildet sind.

3. Vorrichtung nach einem der Ansprüche 1 bis 2, wobei der Durchmesser der Diffusionsöffnungen (26) klein ist, damit die Einleitungsgeschwindigkeit groß ist, wobei ihr Durchmesser beispielsweise im Bereich von 3 mm bis 7 mm, vorzugsweise bei 5 mm liegt.

4. Vorrichtung nach einem der Ansprüche 1 bis 3, wobei das Führungsgehäuse einen polygonförmigen, vorzugsweise rechtwinkligen Querschnitt, quer zu der Hauptrichtung (X) der Zirkulation der Gase (G) in dem Führungsgehäuse aufweist.

5. Vorrichtung nach Anspruch 4, wobei wenigstens eine Wand des Gehäuses, die wenigstens einer Seite des Polygons, dessen Form sein Querschnitt hat, entspricht, mehrere Einleitungsöffnungen (26) aufweist, die längs dieser Wand verteilt sind.

6. Vorrichtung nach einem der Ansprüche 4 oder 5, wobei wenigstens zwei Wände des Gehäuses, die wenigstens zwei Seiten des Polygons, dessen Form sein Querschnitt hat, entsprechen, jeweils wenigstens eine Einleitungsöffnung (26) aufweisen.

7. Vorrichtung nach einem der Ansprüche 5 oder 6, wobei der Durchmesser der Diffusionsöffnungen (26) dafür ausgelegt ist, die Einleitung rückgeführter Gase (H) von einer ersten Seite bis zu einer zweiten Seite gegenüber der ersten Seite des Polygons, dessen Form der Querschnitt des Führungsgehäuse hat, zu ermöglichen.

8. Vorrichtung nach einem der Ansprüche 4 bis 7, wobei das Einleiten des Stroms rückgeführter Gase (H) auf wenigstens 50 % des gesamten Umfangs des Polygons, dessen Form der Querschnitt des Führungsgehäuse hat, erfolgt.

## Claims

1. Device for mixing a flow of intake gases and a flow of recirculated exhaust gases for the purpose of admitting them into the cylinder head of a motor vehicle internal combustion engine, the device comprising:
- a manifold (30) for distributing the gases in the cylinder head, which manifold is supplied with intake gases (G),
- means (20) for injecting recirculated exhaust gases (H) of the engine into the flow of intake gases (G), and
- at least one housing for guiding the gases in the mixing device, the gases flowing in the guide housing in a main direction (X), the housing comprising at least one portion defining a single gas flow path for all the gases, and
- a heat exchanger (10) with a heat exchange bundle (11) for cooling gases (G), which is supplied with intake gases, the heat exchanger being connected to the manifold (30) to supply it with cooled intake gases,
which device is **characterized in that**
- the injection means (20) comprise a plurality of diffusion orifices (26) opening onto the guide housing in its portion defining a single gas flow path,
- the said diffusion orifices (26) extending substantially in the same plane transverse to the direction (X) and being designed to inject the flow of recirculated exhaust gases (H) perpendicularly to the main direction (X) of flow of the gases (G) in the guide housing,
- the heat exchange bundle (11) comprising an inlet face for the gases to be cooled and an outlet face for the cooled gases, the injection means (20) opening onto the guide housing at the outlet face of the heat exchange bundle (11).

2. Device according to Claim 1, in which the injection means (20) comprise a gridded injection slot (24) in which the said diffusion orifices (26) are formed.

3. Device according to either of Claims 1 and 2, in which the diameter of the diffusion orifices (26) is small so that the injection speed is large, for example their diameter being between 3 mm and 7 mm, preferably 5 mm.

4. Device according to one of Claims 1 to 3, in which the guide housing has a polygonal, preferably rectangular, cross section transverse to the main direction (X) of flow of the gases (G) in the guide housing.

5. Device according to Claim 4, in which at least one wall of the housing, corresponding to at least one side of the polygon of which its cross section has the shape, comprises a plurality of injection orifices (26) distributed along this wall.

6. Device according to either of Claims 4 and 5, in which at least two walls of the housing, corresponding to at least two sides of the polygon of which its cross section has the shape, each comprise at least one injection orifice (26).

7. Device according to either of Claims 5 and 6, in which the diameter of the diffusion orifices (26) is designed to allow the injection of the recirculated gases (H) from a first side to a second side, opposite to the first side, of the polygon of which the cross section of the guide housing has the shape.

8. Device according to one of Claims 4 to 7, in which the injection of the flow of recirculated gases (H) is carried out over at least 50% of the total periphery of the polygon of which the cross section of the guide housing has the shape.
